# EUROPEAN PATENT APPLICATION

(11) **EP 4 601 220 A1**
(43) Date of publication of application: **13.08.2025**
(21) Application number: 24156958.1
(22) Date of filing: 09.02.2024
(51) Int. Cl.: H04B 10/112, H04B 10/118

(54) **OPTICAL TERMINAL, GROUND STATION, AIRCRAFT, SATELLITE, ALL-SKY CAMERA AND METHOD FOR FREE SPACE LASER COMMUNICATION**

(71) Applicant: Airbus S.A.S., 31700 Blagnac (FR)
(72) Inventor: Kevin Schortt, 82024 Taufkirchen (DE)
(74) Representative: OTN Airbus SAS

(57) **Abstract**

The present invention provides an optical terminal (1) for free space laser communication, comprising a wide-field sensor (2) configured and arranged to have a field of view (21) enclosing at least a cone having an apex angle of 45° of a target angular range (R), wherein the wide-field sensor (2) is configured to generate a detection signal (21) in response to a detection of an optical signal (5) having an intensity above a predetermined threshold incident from a target direction (T) within the field of view (21), a laser communication unit (3) comprising a laser source (31) configured to generate a laser beam (B), an optical system (32) having an optical axis (A) and configured to receive the laser beam (B) on the optical axis (A), and a steering unit (33) configured to control at least one component of the optical system (32) for steering the laser beam (B) over the entire target angular range, a controller (4) configured to receive the detection signal (21) from the wide-field sensor (2), determine the target direction (T) based on the detection signal (21), control the steering unit (33) for aligning the optical axis (A) to the determined target direction (T), and control the laser source (31) for emitting the laser beam (B). The present invention further provides a ground station (6), an aircraft (7), a satellite (8), an all-sky camera (2) for use in free space laser communication as well as a method for free space laser communication.

## Description

### TECHNICAL FIELD OF THE INVENTION

The present invention relates to an optical terminal, a ground station, an aircraft, and a satellite comprising the optical terminal, an all-sky camera as well as a corresponding method for free space laser communication.

### TECHNICAL BACKGROUND

In scenarios of secure wireless communication such as quantum optical communication, operators want to establish optical links without the use of radio frequency communication to exchange position information between the communicating partners. With such radio-silent optical communications, an additional layer of stealth would be established for this communication technology.

All-sky cameras and similar wide-field sensors are used for observing sky conditions and identifying cloud cover percentages from a position on the ground. These sensors cover at least a substantial part of the visible celestial hemisphere and can be equipped with infrared-sensitive sensors to be able to detect wavelengths commonly used in optical communications. However, currently, such cameras are not used in the free-space optical communication field.

Therefore, the problem of the present invention is how to provide an optical terminal with improved means for establishing a communication link with a communication partner.

### SUMMARY OF THE INVENTION

According to the invention, this problem is solved by the subject matter of the independent claims.

According to a first aspect of the invention, an optical terminal for free space laser communication is provided. The optical detector comprises a wide-field sensor configured and arranged to have a field of view enclosing at least a target angular range, wherein the wide-field sensor is configured to generate a detection signal in response to a detection of an optical signal having an intensity above a predetermined threshold incident from a target direction within the field of view, a laser communication unit comprising a laser source configured to generate a laser beam, an optical system having an optical axis and configured to receive the laser beam on the optical axis, and a steering unit configured to control at least one component of the optical system for steering the laser beam over the entire target angular range, a controller configured to receive the detection signal from the wide-field sensor, determine the target direction based on the detection signal, control the steering unit for aligning the optical axis to the determined target direction, and control the laser source for emitting the laser beam.

According to a second aspect of the invention, a ground station for free space laser communication is provided, the ground station comprising the inventive optical terminal.

According to a third aspect of the invention, an aircraft for free space laser communication is provided, the aircraft comprising the inventive optical terminal.

According to a fourth aspect of the invention, a satellite for free space laser communication is provided, the satellite comprising the inventive optical terminal.

According to a fifth aspect of the invention, a method for free space laser communication is provided. The method comprises the steps of detecting an optical signal from a target direction by a wide-field sensor, wherein the wide-field sensor is configured and arranged to have a field of view enclosing at least a target angular range, sending a detection signal in response to the detected optical signal to a controller, determining, by the controller, the target direction based on the detection signal, aligning an optical axis of an optical system of a laser communication unit to the determined target direction, and emitting a laser beam for laser communication on the optical axis towards the target direction.

According to a sixth aspect of the invention, an all-sky camera used for free space laser communication is provided. The all-sky camera is configured to observe the entire visible celestial hemisphere.

A fundamental concept of the invention is to make use of a wide-field sensor to capture a wide field of view in which a communication partner may be located. By the use of the wide-field sensor, a scene is imaged in real-time to detect an initial signal, such as a laser signal, preferably in the infrared region of the spectrum coming from a potential communication partner. Upon the first detection of such an incoming laser signal, software would then translate the position of that signal within the image into a set of pointing angles for the optical pointing system or steering unit to interpret and translate the laser beam to that location in the sky.

During the time of receiving a detection of the initial optical signal, the wide-field sensor is set into a seeking mode to search a target angular range for an optical signal above a predetermined threshold, which has been set in advance. Throughout the present invention, the wide-field sensor is understood as a separate component separate from the laser communication unit. The field of view of the wide-field sensor extends over a substantial angular range, which is typically larger than e.g. 10°, covering the whole target angular range. The target angular range is a range in which a potential communication partner is likely to appear.

In a typical scenario, the target angular range encloses a cone having an apex angle of 45°, so that the field of view of the wide-field sensor is selected to be at least 90° in two dimensions, i.e. polar and azimuth angle. Typically, larger apex angles are required, such as 60° 75° or 90° or, in some cases even larger. This means that the total field of view covers twice the apex angle, i.e. 120°, 150° or 180° or even larger.

Such a seeking mode can be performed from both ends of the communication link with both terminals in a seeking mode and a hemispherical field-of-view sensor such as an all-sky camera waiting to detect the flashes of the incoming laser signals. The wide-field sensor and the all-sky camera used here for free space laser communication are configured to convert the optical signal into an electrical detection signal that is sent to the controller, which controls a steering unit of the laser communication unit. The detection signal contains information about the incident position on a sensor area, through which information about the target direction, from which the optical signal has been emitted, can be derived. The controller then determines the target position and controls the steering unit to align the optical axis of the optical system in the laser communication unit towards the target direction for starting the laser communication between the optical terminal and a target object that has emitted the optical signal as a communication partner.

A particular advantage of the solution according to an aspect of the invention is that it allows operators to establish free-space optical communication links without the use of radio frequency channels to exchange position information. In scenarios where security is critical, this method is beneficial as it brings an additional layer of stealth to the optical communication link in that there are no RF-transmissions that can be detected.

Advantageous embodiments and further developments emerge from the description with reference to the figures.

According to some further aspects of the optical terminal according to the invention, the wide-field sensor is configured as a hemispherical field-of-view sensor. The hemispherical field-of-view sensor may be an all-sky camera. The hemispherical field-of-view sensor may have a field of view of at least a cone having an apex angle of at least 80°. The hemispherical field-of-view sensor preferably has a field of view of a cone having an apex angle of about 90°, or more. In this way, the entire visible celestial hemisphere can be searched for an optical signal from a potential communication partner.

According to some further aspects of the optical terminal according to the invention, the wide-field sensor comprises a narrow bandpass filter, wherein the wavelength of the optical signal is located in a passband of the narrow bandpass filter, wherein a wavelength of the optical signal is in particular between 800 nm and 2000 nm, preferably between 900 nm and 1100 nm, or 1400 nm and 1600 nm. In this way, wavelengths commonly used for terrestrial optical communication can be applied so that similar components may be used.

According to some further aspects of the optical terminal according to the invention, the laser source is configured as a pulsed laser source. The laser beam is configured as a stream of pulses. Information can be encoded into the pulses by direct modulation of the drive current, or by use of an optical modulator. The laser source may be a single-photon laser source configured to emit a stream of photons. In this way, quantum secure communication with the involvement of any radio link can be established. The laser communication unit may also comprise an encoder configured to encode the single-photon pulses, e.g. for Quantum Key Distribution, QKD. The single-photon pulses can be encoded according to common protocols, such as BB84 or E91. For encoding, an optical property, such as the polarization or the optical angular momentum may be . Contrary, the laser source may be a continuous source. The laser source, pulsed or continuous, may be applied for a classical optical communication link with a larger amount of photons per bit and using common modulation schemes such as on/off-keying, differential phase-shift keying, wavelength-division-multiplexed and so on.

According to some further aspects of the optical terminal according to the invention, the steering unit comprises a coarse steering unit mounted to a telescope of the optical system and configured such that a telescope axis of a telescope is steerable over the target angular range. The target angular range may be the entire visible hemisphere. By steering the telescope, a rather fast steering system is achieved for establishing an optical communication link between a target object emitting the optical signal. With the fast steering system, the target direction may not be altered very much, thus relieving the requirements for another search or scan to find the target object.

According to some further aspects of the optical terminal according to the invention, the steering unit comprises a fine steering unit configured to deflect an optical element arranged on the optical axis. In this way, very precise pointing can be achieved to establish the communication link to the target object. With such precise pointing, a greater fraction of the emitted power arrives at the target object, thus relieving the power requirements of the links. In this way, security is further improved.

According to some further aspects of the optical terminal according to the invention, the laser communication unit comprises a narrow field detector configured to detect infrared light over a predetermined spectral band and configured to have a narrow field of view around the optical axis and provide a second detection signal. The narrow field of view may be within a cone having an apex angle of 1°. The controller is configured to determine the target direction based on the second detection signal. In this way, a more precise determination of the target direction can be achieved. This can be used to update the target direction determined by the detection signal from the wide-field sensor to achieve an updated target direction. This updated target direction differs from the originally determined target direction due to the relative velocities of the optical terminal and a target object emitting the optical signal.

According to some further aspects of the optical terminal according to the invention, the controller is configured to determine a position of a target object emitting the optical signal based on the determined target direction and a further parameter. In this way, a location of the target can be estimated. For this, the further information may be a temporal change in the target direction. Knowing the approximate altitude above the terrestrial surface, an aircraft may be distinguishable from a satellite. The further parameter may also be the optical power of the optical signal. Depending on the system design, less optical power of the optical signal may indicate a further distance to the object.

According to some further aspects of the optical ground station according to the invention, wherein the target angular range is the visible celestial hemisphere. In this way, maximum coverage for detecting a target object can be achieved.

According to some further aspects of the aircraft according to the invention, the target angular range is a full spherical coverage around the aircraft. In this way as well, maximum coverage for detecting a target object can be achieved so that air-to-ground, but also inter platform links such as air-to-air and air-to-satellite links can be established.

According to some further aspects of the satellite according to the invention, the target angular range is a full spherical coverage around the satellite. In this way again, maximum coverage for detecting a target object can be achieved.

According to some further aspects of the method according to the invention, aligning the optical axis with the target direction comprises controlling a coarse-steering unit to steer a telescope axis of a telescope of the laser communication unit such that the telescope axis is aligned with the target direction within a first predetermined tolerance within a first predetermined time period. The first predetermined tolerance may be about 1°, preferably 0.5°, more preferably 0.1° or less. The first predetermined time period may be 30 s, 20 s, 10 s or less.

According to some further aspects of the method according to the invention, aligning the optical axis with the target direction comprises controlling a fine-steering unit to steer an optical element of the laser communication unit to align the optical axis to the target direction within a second predetermined tolerance within a second predetermined time period. The second predetermined tolerance may be about 1', preferably 10" more preferably 3" or less, and the second predetermined time period may be 1 s, 10 ms, 1 ms or less. In this way, very precise pointing can be achieved to establish the communication link to the target object. With such precise pointing, a greater fraction of the emitted power arrives at the target object, thus relieving the power requirements of the links. In this way, security is further improved.

According to some further aspects of the method according to the invention, the method further comprises detecting a second optical signal by a narrow field detector, wherein the narrow field detector has a narrow field of view. In particular, the narrow field of view may be within a cone having an apex angle of 1°. The controller is configured to determine an updated target direction based on a second detection signal from the narrow field detector and align the optical axis towards the updated target direction. This updated target direction typically differs from the originally determined target direction due to the relative velocities of the optical terminal and a target object emitting the optical signal. In this way, a more precise determination of the target direction can be achieved.

According to some further aspects of the method according to the invention, the controller determines the position of a target object in the target direction based on the detected optical signal and a further parameter, wherein the further information in particular is a temporal change in the target direction. By the temporal change and knowing the approximate altitude above the terrestrial surface, a velocity may be estimated for the target object such as an aircraft or a satellite. Since the velocities of aircraft and satellites are very different, an aircraft may be distinguishable from a satellite in this way. The further parameter may also be the optical power of the optical signal. Depending on the system design, less optical power of the optical signal may indicate a further distance to the object.

The above aspects can be combined with each other as desired, if useful. In particular, where appropriate, all features of the optical detector and the optical terminal are transferable to the ground station, the aircraft, the satellite, the all-sky camera and/or the method for free space communication, and vice versa. Further possible embodiments, further developments and implementations of the invention also comprise combinations, not explicitly mentioned, of features of the invention described before or below with respect to the embodiments. In particular, the skilled person will thereby also add individual aspects as improvements or additions to the respective basic form of the present invention.

### BRIEF SUMMARY OF THE DRAWINGS

The present invention is explained in more detail below with reference to the embodiments shown in the schematic figures:
- Fig. 1: a schematic illustration of an optical terminal for free space communication according to an embodiment of the invention;
- Fig. 2: a schematic illustration of an optical ground station for free space communication according to an embodiment of the invention;
- Fig. 3: a schematic illustration of a method for free space communication according to an embodiment of the invention;
- Fig. 4: a schematic illustration of an all-sky camera used for free space laser communication and integrated into an optical ground station according to an embodiment of the invention;
- Fig. 5: a schematic illustration of an aircraft for free space communication according to an embodiment of the invention; and
- Fig. 6: a schematic illustration of a satellite for free space communication according to an embodiment of the invention.

In the figures of the drawing, elements, features and components which are identical, functionally identical and of identical action are denoted in each case by the same reference designations unless stated otherwise.

### DESCRIPTION OF EXEMPLARY EMBODIMENTS

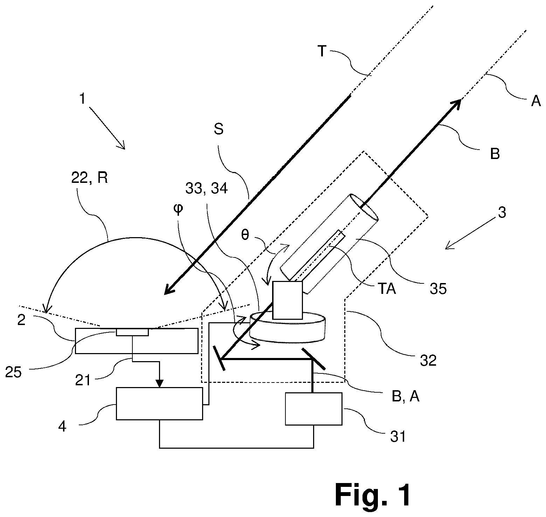

Fig. 1 shows a schematic illustration of an optical terminal 1 for free space communication according to an embodiment of the invention.

The optical terminal 1 for free space laser communication shown in Fig. 1 comprises a wide-field sensor 2 configured and arranged to have a field of view 21 enclosing at least of a target angular range R. The wide-field sensor 2 is configured to generate a detection signal 21 containing information about the position on the sensor area 25 in response to a detection of an optical signal S having an intensity above a predetermined threshold incident from a target direction T within the field of view 22.

In the two-dimensional projection shown in Fig. 1, the field of view 22 of the wide-field sensor 2 is equal to the target angular range R, which is a cone having an apex angle of 45°, in this case more than 75°. Therefore, the field of view 22 covers an angle of more than 90° in two dimensions, which is twice the apex angle of 45° of the cone not shown in Fig. 1 enclosed by the target angular range R or the field of view 22. The two dimensions are defined by the polar angle θ and an azimuth angle φ.

The target angular range R defines a range where a potential target object 5 emitting the optical signal S can be located. The target angular range R can be the visible celestial hemisphere in the case, where the wide-field sensor 2 is placed on the ground so that it can detect an aircraft or a satellite emitting the signal, as will be described further below.

The optical terminal 1 further comprises a laser communication unit 3. The laser communication unit 3 can be a regular optical transmitter or receiver for free space, classical or quantum, laser communication. The laser communication unit 3 comprises a laser source 31, which is configured to generate a laser beam B. Any kind of suitable laser source 31 can be used for this application. For classical communication, a laser diode can be used and the laser beam B can be modulated directly or by an electro-optical element or the like. For quantum communication, typically single photon sources emitting single photon pulse are used, as will be described further below.

The laser communication unit 3 further comprises an optical system 32 having an optical axis A and configured to receive the laser beam B on the optical axis A. The shown optical system 32 is strongly simplified for illustrative purposes. The optical system 32 may include beam shaping optics, collimating optics, and others arranged on the optical axis A to guide the laser beam B along the optical path defined by the optical axis A.

The laser communication unit 3 further comprises a steering unit 33 configured to control at least one component of the optical system 32 for steering the laser beam B over the entire target angular range R, i.e. in both dimensions defined by a polar angle θ and an azimuth angle φ. The steering unit can, in principle be any suitable system or combination of systems. In some embodiments, the steering unit mechanically steers an optical element, such as a telescope 35 shown in Fig. 1, over the entire angular range R. In the embodiment of the optical terminal 1 of Fig. 1, the steering unit 33 comprises a coarse steering 34 unit mounted to the telescope 35. The coarse steering unit 34 is configured such that a telescope axis TA of the telescope 35 is steerable over the target angular range R. In further embodiments, the coarse steering 34 unit and is configured to steer the telescope 35 over the entire visible celestial hemisphere.

The optical terminal 1 further comprises a controller 4 connected to the wide-field sensor 2. The controller 4 is configured to receive the detection signal 21 from the wide-field sensor 2. The controller 4 is further configured to determine the target direction T based on the detection signal 21 by extracting the information about the position on the sensor area 25 and translate this information into a target direction T. The controller 4 is further configured to control the steering unit 33 for aligning the optical axis A to the determined target direction T. The controller 4 is further configured to control the laser source 31 for emitting the laser beam B.

In preferred embodiments, the wide-field sensor 2 is configured as a hemispherical field-of-view sensor 2. In some embodiments, the hemispherical field-of-view sensor 2 is an all-sky camera. The hemispherical field-of-view sensor 2 in particular has a field of view 22 of at least a cone having an apex angle of at least 80°. In some preferred embodiments, the field of view 22 of the hemispherical field-of-view sensor 2 encloses a cone having an apex angle of about 90°.

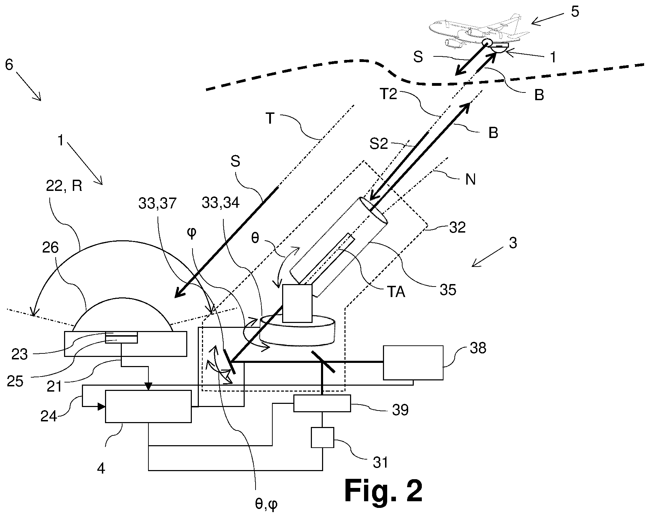

Fig. 2 shows a schematic illustration of an optical ground station 6 for free space communication according to an embodiment of the invention.

The optical ground station 6 for free space laser communication shown in Fig. 1 includes an optical terminal 1, which is based on the embodiment of the optical terminal 1 shown in Fig. 1. In the present case, the target angular range R is the entire visible celestial hemisphere.

The wide-field sensor 2 comprises a narrow bandpass filter 23. The wavelength of the optical signal S is located in a passband of the narrow bandpass filter 23. In this way, stray light coming from other sources can be filtered away. In some embodiments, a wavelength of the optical signal S is between 800 nm and 2000 nm. In preferred embodiments, the wavelength of the optical signal is between 900 nm and 1100 nm, or 1400 nm and 1600 nm to be compatible with the terrestrial optical communication network. Optical components of the optical system 32 are adapted to these wavelengths. Furthermore, the wide-field sensor 2 has a lens 26, in particular a fish-eye lens 26, which supports collecting light within the field of view 22 and collimating it onto a sensor area 25, where the optical signal is converted into an electrical detection signal 21.

Furthermore, in this embodiment, the laser source 31 is configured as a pulsed laser source. The laser beam B is configured as a stream of pulses. A modulator 39 is configured to encode the pulses by polarization or optical angular momentum. In further embodiments, the laser source 31 is a laser diode and the modulator 39 is configured to modulate the laser B by a classical technique, such as On/Off-keying, differential phase-shift keying or wavelength-division-multiplexed, in which one bit of information contains a large number of photons. In further embodiments, the laser source 31 is a single-photon laser source configured to emit a stream of photons.

In this embodiment of the optical terminal 1, the controller 4 is configured to determine a position of a target object 5 emitting the optical signal S based on the determined target direction T and a further parameter. In the present embodiment, the further information in particular is a temporal change in the target direction T. Knowing the approximate altitude above the terrestrial surface, the target object 5 can be identified as an aircraft 7 or a satellite 8. In further embodiments, the further parameter may also be the optical power of the optical signal. Depending on the system design, less optical power of the optical signal S may indicate a further distance to the target object 5.

In the embodiment of the optical terminal 1 of Fig. 1, the steering unit 33 comprises a coarse steering 34 unit configured such that a telescope axis TA of a telescope 35 of the optical system 33 is steerable over the entire visible celestial hemisphere.

The steering unit 33 further comprises a fine steering unit 36 configured to deflect an optical element 37 arranged on the optical axis A. In this embodiment, a fast steering mirror 37 is employed for steering the laser beam B towards the target object 5 in both dimensions, i.e. polar and azimuth angle θ, φ. In some embodiments, the fine-steering unit 36 is based on non-mechanical beam steering, realizable e.g. by diffractive optical elements or optical phased arrays.

In the present embodiment, the laser communication unit 3 comprises a narrow field detector 38 configured to detect infrared light over a predetermined spectral band and configured to have a narrow field of view N. The narrow field of view N may describe a cone having an apex angle of 1° or less. The narrow field detector 38 is arranged such that the narrow field of view N is located around the optical axis A. The narrow field detector 38 is configured to provide a second detection signal 24, which is sent from the narrow field detector 38 to the controller 4, which is connected to the narrow field detector 38. In the present case, the narrow field detector 38 detects a second optical signal S2, which is incident from a second target direction T2, which is slightly different from the first-detected target direction T due to the time delay of detection and the velocity of the target object 5. In some embodiments, the narrow field detector 38 may also include a decoder for decoding an encoded optical signal, such as a classical or QKD laser communication beam.

The controller 4 then determines the target direction T based on the second detection signal 24. The controller 4 then determines an updated target direction T2 based on a second detection signal 24 from the narrow field detector 38 and controls the steering unit 33 to align the optical axis A towards the updated target direction T.

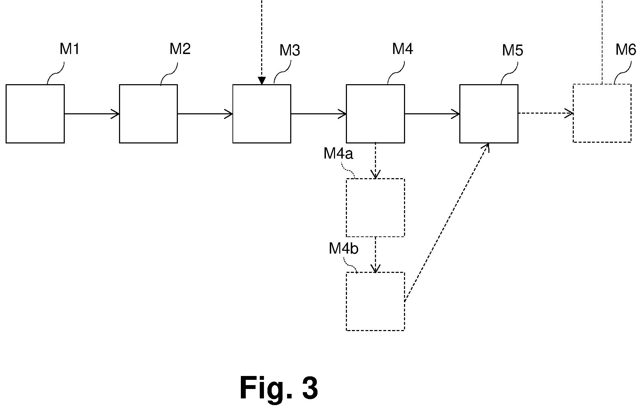

Fig. 3 shows a schematic illustration of a method for free space communication according to an embodiment of the invention.

In a first step of the method for free space laser communication an optical signal S is detected M1 from a target direction T by a wide-field sensor 2. The wide-field sensor 2 is configured and arranged to have a field of view 22 enclosing at least a target angular range R. In some embodiments, the target angular range R is at least a cone having an apex angle of 45°. In the next step, a detection signal 21 is sent M2 in response to the detected optical signal S to a controller 4. As next step, the target direction T based on the detection signal 21 is determined M3 by the controller 4. Then an optical axis A of an optical system 32 of a laser communication unit 3 is aligned M4 to the determined target direction T, in particular by controlling a steering unit 33.

In preferred embodiments, a coarse-steering unit 34 is controlled M4a to steer a telescope axis TA of a telescope 35 of the laser communication unit 3 such that the telescope axis TA is aligned with the target direction T within a first predetermined tolerance within a first predetermined time period. The first predetermined tolerance can be about 2°, 1°, 0.5° or less, and the first predetermined time period may be 30 s, 20 s, 10 s or less. In some embodiments, a fine-steering unit 36 is controlled M4b to steer an optical element 37 of the laser communication unit 3 to align the optical axis A to the target direction T within a second predetermined tolerance within a second predetermined time period. The second predetermined tolerance can be about 1', preferably 10", more preferably 3" or less, and the predetermined time period may be 1 s, 10 ms, 1 ms or less.

In the method for free space laser communication a laser beam B for laser communication is emitted M5 on the optical axis towards the target direction T.

In preferred embodiments, a second optical signal S2 is detected M6 by a narrow field detector 38. The narrow field detector 38 has a narrow field of view N. The narrow field of view N may be located within a cone having an apex angle of 1° around the optical axis A. The controller 4 then determines M3 an updated target direction T based on a second detection signal 24 from the narrow field detector 38 and aligns M4 the optical axis A towards the updated target direction T.

In some embodiments, the controller 4 determines the position of a target object 5 in the target direction T based on the detected optical signal S and a further parameter. In some of these embodiments, the further information in particular is a temporal change in the target direction T to get information about the velocity of the target object 5, as described above.

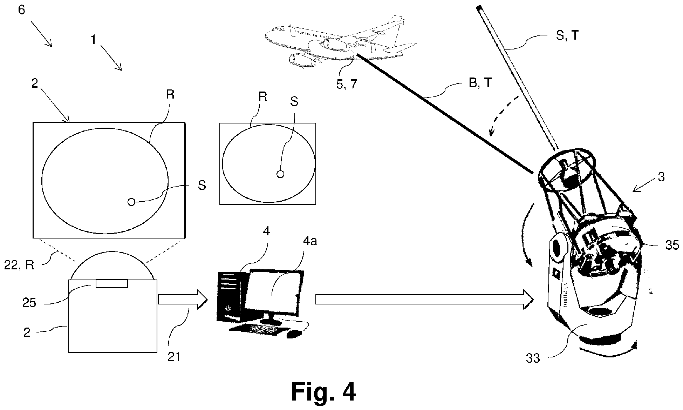

Fig. 4 shows a schematic illustration of an all-sky camera 2 used for free space laser communication and integrated into an optical ground station 6 according to an embodiment of the invention.

This embodiment shows an all-sky camera 2 as a wide-field sensor 2 or hemispherical field-of-view sensor2 used for free space laser communication. The all-sky camera 2 is integrated into a ground station similar to the one described in Fig. 2. In this embodiment, the field of view 22 is directed to the target angular range R, which encloses the entire visible celestial hemisphere to detect an optical signal S. A detection signal 21 containing information about the position on the sensor area 25 is sent to a computer 4 that is configured as a controller 4 and having a user interface 4a for graphically depicting the detection signal 21. In this embodiment, the all-sky-camera 2 also determines a velocity of a target object 5 by constantly detecting the optical signal S and determining the corresponding target direction T to the target object 5. The computer 4 then determines that the target object 5 is an aircraft 7 and controls a coarse steering unit 33 to direct the telescope 35 towards the aircraft 7. A laser beam B is then sent toward the aircraft 7 to start communication between the ground station 6 and the aircraft 7.

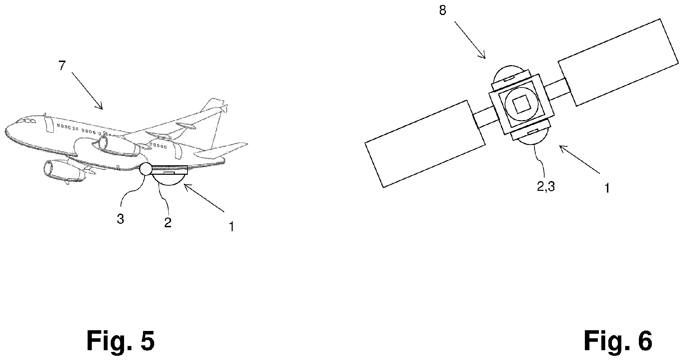

Fig. 5 shows a schematic illustration of an aircraft 7 for free space communication according to an embodiment of the invention.

Fig. 5 shows an aircraft 7 for free space laser communication. The aircraft 7 comprising the optical terminal 1 as shown for example in Fig. 4. In some embodiments of the aircraft 7, the target angular range R is an area of the terrestrial surface within a visual range of the aircraft 7. In further embodiments, the target angular range R for the widefield sensor 2 installed on the aircraft 7 is a full spherical coverage around the aircraft 7. In this way, air-to-ground and inter platform links such as air-to-air, i.e. links between aircrafts 7, and air-to-space, i.e. links between aircraft 7 to satellite 8 can be established.

Fig. 6 shows a schematic illustration of a satellite 8 for free space communication according to an embodiment of the invention.

Fig. 6 shows a satellite 8 for free space laser communication. The satellite 8 comprises the optical terminal 1 as described above with reference to Fig. 1 or 2. In some embodiments, the target angular range R preferably is a full spherical coverage around the satellite 8. Thus, multiple optical terminals 1 are integrated to the satellite 8. In the particular embodiment of the optical terminal 1, the wide-field sensor 2 and the laser communication unit 3 use the same optical aperture to receive the optical signal S and emit the laser beam B.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to persons skilled in the art on the basis of their knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps that have been described may also be used in combination with other characteristics or steps and in any order unless the disclosure or context suggests otherwise. This disclosure hereby incorporates by reference the complete disclosure of any patent or application from which it claims benefit or priority.

### LIST OF REFERENCE SIGNS

- 1: Optical terminal
- 2: wide-field sensor
- 3: laser communication unit
- 4: controller
- 4a: user interface
- 5: target object
- 6: ground station
- 7: aircraft
- 8: satellite
- 21: detection signal
- 22: field of view
- 23: bandpass filter
- 24: second detection signal
- 25: sensor area
- 26: lens
- 31: laser source
- 32: optical system
- 33: steering unit
- 34: coarse steering unit
- 35: telescope
- 36: fine steering unit
- 37: optical element
- 38: narrow field detector
- 39: Modulator
- A: optical axis
- B: Laser Beam
- M1 - M5: method steps
- R: target angular range
- S, S2: Optical Signal
- T, T2: Target Direction
- TA: telescope axis

## Claims

1. Optical terminal (1) for free space laser communication, comprising
a wide-field sensor (2) configured and arranged to have a field of view (22) enclosing at least a target angular range (R), wherein the wide-field sensor (2) is configured to generate a detection signal (21) in response to a detection of an optical signal (S) having an intensity above a predetermined threshold incident from a target direction (T) within the field of view (22),
a laser communication unit (3) comprising
a laser source (31) configured to generate a laser beam (B),
an optical system (32) having an optical axis (A) and configured to receive the laser beam (B) on the optical axis (A), and
a steering unit (33) configured to control at least one component of the optical system (32) for steering the laser beam (B) over the entire target angular range,
a controller (4) configured to
receive the detection signal (21) from the wide-field sensor (2),
determine the target direction (T) based on the detection signal (21),
control the steering unit (33) for aligning the optical axis (A) to the determined target direction (T), and
control the laser source (31) for emitting the laser beam (B).

2. Optical terminal (1) according to claim 1, wherein the wide-field sensor (2) is configured as a hemispherical field-of-view sensor, wherein the a hemispherical field-of-view sensor in particular has a field of view (22) of at least a cone having an apex angle of at least 80°, preferably 90°.

3. Optical terminal (1) according to claims 1 or 2, wherein the wide-field sensor (2) comprises a narrow bandpass filter (23), wherein the wavelength of the optical signal (S) is located in a passband of the narrow bandpass filter (23), wherein a wavelength of the optical signal (S) is in particular between 800 nm and 2000 nm, preferably between 900 nm and 1100 nm, or 1400 nm and 1600 nm.

4. Optical terminal (1) according to any of the previous claims, wherein the laser source (31) is configured as a pulsed laser source, and wherein the laser beam (B) is configured as a stream of pulses.

5. Optical terminal (1) according to any of the previous claims, wherein the steering unit (33) comprises a coarse steering (34) unit mounted to a telescope (35) of the optical system (32) and configured such that a telescope axis (TA) of the telescope (35) is steerable over the target angular range, and
wherein the steering unit (33) preferably comprises a fine steering unit (36) configured to deflect an optical element (37) arranged on the optical axis (A).

6. Optical terminal (1) according to any of the previous claims, wherein the laser communication unit (3) comprises a narrow field detector (38) configured to detect infrared light over a predetermined spectral band and configured to have a narrow field of view (N), in particular within a cone having an apex angle of 1°, around the optical axis (A) and provide a second detection signal (24), and wherein the controller (4) is configured to determine the target direction (T) based on the second detection signal (24).

7. Optical terminal (1) according to any of the previous claims, wherein the controller (4) is configured to determine a position of a target object (5) emitting the optical signal (S) based on the determined target direction (T) and a further parameter, wherein the further information in particular is a temporal change in the target direction (T).

8. Optical ground station (6) for free space laser communication, the optical ground station (6) comprising the optical terminal (1) according to any of the previous claims, wherein the target angular range (R) preferably is the visible celestial hemisphere.

9. Aircraft (7) for free space laser communication, the aircraft (7) comprising the optical terminal (1) according to any of claims 1 to 7, wherein the target angular range (R) preferably is a full spherical coverage around the aircraft (7).

10. Satellite (8) for free space laser communication, the satellite (8) comprising the optical terminal (1) according to any of claims 1 to 7, wherein the target angular range (R) preferably is a full spherical coverage around the satellite (8).

11. Method for free space laser communication, comprising:
- detecting (M1) an optical signal (S) from a target direction (T) by a wide-field sensor (2), wherein the wide-field sensor (2) is configured and arranged to have a field of view (22) enclosing at least a target angular range (R),
- sending (M2) a detection signal (21) in response to the detected optical signal (S) to a controller (4),
- determining (M3), by the controller (4), the target direction (T) based on the detection signal (21),
- aligning (M4) an optical axis (A) of an optical system (32) of a laser communication unit (3) to the determined target direction (T), and
- emitting (M5) a laser beam (B) for laser communication on the optical axis towards the target direction (T).

12. Method according to claim 11, wherein aligning (M4) the optical axis (A) with the target direction (T) comprises
- controlling (M4a) a coarse-steering unit (34) to steer a telescope axis (TA) of a telescope (35) of the laser communication unit (3) such that the telescope axis (TA) is aligned with the target direction (T) within a first predetermined tolerance, in particular of about 1°, within a first predetermined time period, and preferably
- controlling (M4b) a fine-steering unit (36) to steer an optical element (37) of the laser communication unit (3) to align the optical axis (A) to the target direction (T) within a second predetermined tolerance, in particular of about 10", within a second predetermined time period.

13. Method according to claim 11 or 12, further comprising
detecting (M6) a second optical signal (S2) by a narrow field detector (38), wherein the narrow field detector (38) has a narrow field of view (N), in particular being within a cone having an apex angle of 1°,
wherein the controller (4) is configured to determine an updated target direction (T) based on a second detection signal (24) from the narrow field detector (38) and align the optical axis (A) towards the updated target direction (T).

14. Method according to claims 11 to 13, wherein the controller (4) determines the position of a target object (5) in the target direction (T) based on the detected optical signal (S) and a further parameter, wherein the further information in particular is a temporal change in the target direction (T).

15. An all-sky camera (2) used for free space laser communication, wherein the all-sky camera (2) is configured to observe the entire visible celestial hemisphere.
